# EUROPEAN PATENT SPECIFICATION

(11) **EP 2 360 325 B1**
(45) Date of publication and mention of the grant of the patent: **28.09.2016**
(21) Application number: 11153028.3
(22) Date of filing: 02.02.2011
(51) Int. Cl.: B32B 3/08, E04C 2/36, E04C 2/38, B32B 29/08, B32B 3/20

(54) **A reinforced composite panel**
Verbundstoffverstärkte Platte
Panneau composite renforcé

(30) Priority: 02.02.2010 IT TO20100072
(43) Date of publication of application: 24.08.2011
(73) Proprietor: Bertero, Sebastiano, 12100 Cuneo (IT)
(72) Inventor: Bertero, Sebastiano, 12100 Cuneo (IT)
(74) Representative: Fioravanti, Corrado

(56) References cited:
- EP-A2- 0 206 562
- DE-A1- 3 913 255

## Description

The present invention relates to a reinforced composite panel for the construction of floors, walls, beams and pillars, of the type stated in the preamble of claim 1. A panel of this kind is known from DE 39 13 255 A1. Another panel is known from EP 0 206 562 A2.

A panel having a composite structure of the above-mentioned type is known from EP-A-1 840 290. Generally, the panel consists of corrugated sheets made of resin-impregnated paper, which are overlapped and bonded to each other and alternately inclined, where the valleys of the corrugations of a sheet are linked to the corrugation peaks of the adjacent sheet. These panels have been mainly used for the construction of non-load bearing curtain walls, due to the fact that they are capable of receiving and holding, without undergoing any shape variation, many varying construction materials in their receptacles. These materials are applied by buttering, bonding, spraying or other fastening systems. Typically, normal or fiber-reinforced mortars, lime, pre-mixed plasters, cements, tiles and ceramics, fiberglass, glass- and carbon fibers, plastics and composite materials, paper and decorative laminates, wallpaper, wood, plywoods and derivatives, polystirene and polyurethane are used. These panels are also used as lightweight members in the construction of ribbed slab floors made of reinforced concrete.

Said panels offer high performance in terms of lightness, cost-effectiveness, easiness of assembly and sound-deadening capacity, and withstand both dynamic and sysmic stress as well. However, they do not have such characteristics of static stiffness as to make them suitable for the construction of load-bearing walls and/or floors, unless other traditional tional structural members, such as beams and joists, H-beams and the like, are provided.

The general object of the invention is, accordingly, to provide a reinforced composite panel that combines the characteristics of lightness and cost-effectiveness of the panels as discussed above, in addition to having such an inherent load-bearing capacity as to be suitable for withstanding structural loads, which allows to build floors, walls, beams and pillars. The object of the present invention is solved by the technical features of claim 1.

Another object of the invention is to provide a panel that is particularly easy to assemble and mount with similar panels, according to a substantially modular pattern, in order to build the load-bearing structure of a building.

These and other objects and advantages, which will be better understood below, are achieved according to the invention by a reinforced composite panel having the features stated in the annexed claims.

Several preferred though non-limiting embodiments will be now described, which are provided by way of examples, of a reinforced panel according to the invention; reference will be made to the annexed drawings, in which:

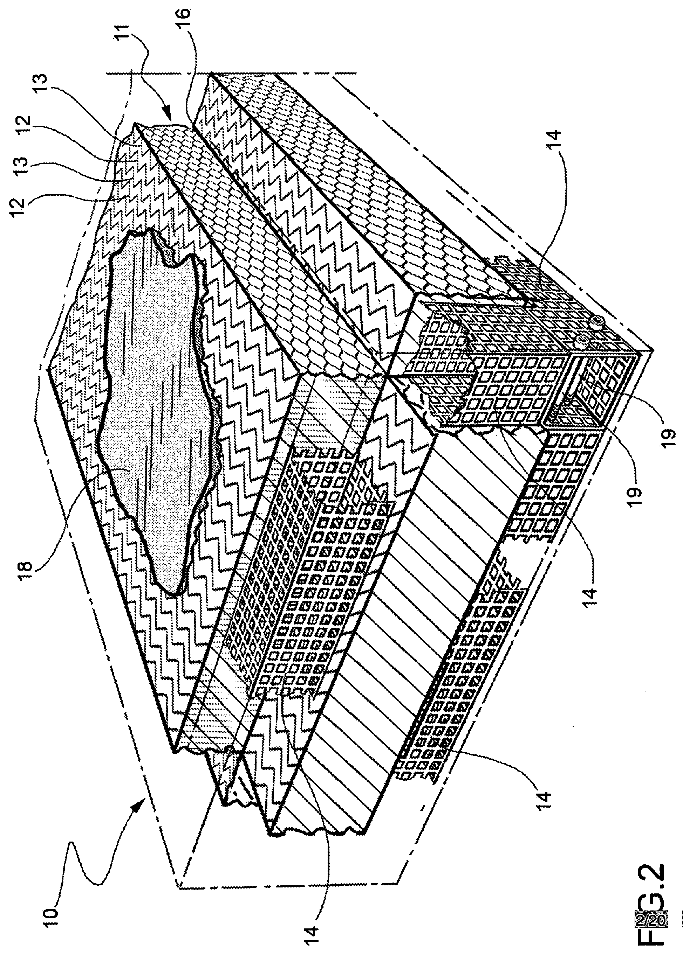

Fig. 1 and 2 are perspective, partially cut-away views of a panel according to an embodiment of the invention;
Fig. 3 is another perspective view of the panel in Fig. 1 and 2; and
Fig. 4 is a partial cross-sectional view of an edge area of a panel according to the invention.

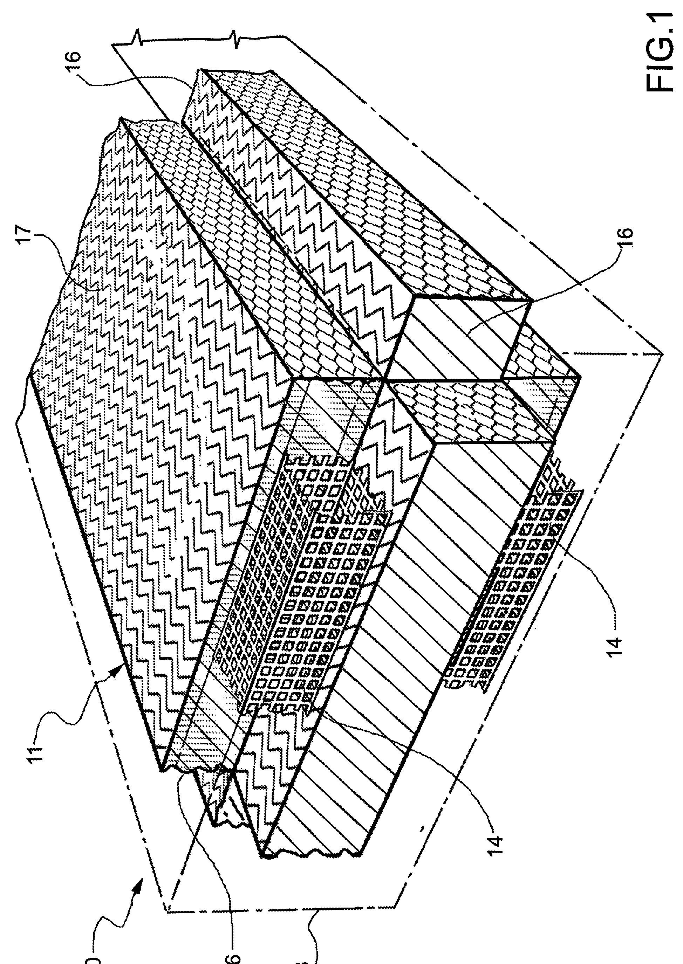

Referring first to Fig. 1, a composite panel is generally designated at 10 which comprises a laminated structure body 11, which consists of a plurality of corrugated sheets 12, 13 that are arranged according to parallel planes. The corrugations of each sheet 12 (or 13) are extended in parallel directions to each other and are crossed relative to those of the two adjacent sheets 13 (or 12), and the valleys of the corrugations of a sheet are secured to the peaks of the corrugations of the adjacent sheet.

The laminated structure body 11 is not much different from the one illustrated and described in EP-A-1 840 290. The corrugated sheets 12, 13 preferably consist of a paper-like material impregnated with artificial resins. By paper-like material is meant herein a material of vegetal origin in the form of a thin foil, such as paper, card and cardboard. In a particularly preferred embodiment, the sheets 12, 13 are made with "Kraft" paper having particular characteristics of resistance and toughness. The paper providing the sheets 12, 13 preferably has a maximum paper density of 1000 g/m², preferably a paper density ranging between 20 and 200 g/m², and still more preferably between 80 and 140 g/m². Alternatively, other types of paper can be used, such as for example newspring or paper obtained by means of recycled waste materials.

The artificial resins that impregnate the paper for providing the corrugated sheets 12, 13 are preferably polymeric materials that can be obtained by means of the well-known polycondensation method, such that the paper material can be impregnated with the not-yet condensed polymers and then wait for the polymers to solidify. For example, melamine resins, or phenolic resins can be used. These artificial resins provide the paper material with high resistance to water, humidity and chemical agents, as well as higher mechanical strength.

Alternatively, the corrugated sheets can consist of polymer, metal, composite materials, such as fiberglass, or others (for example, wood, textiles, felt, wool, and cotton).
The linear corrugations of the corrugated sheets are preferably of regular shapes and sizes. For example, the length of each wave is about twice the height, thereof, suitably the lenght ranges between about 5 and 30 mm, preferably between 16 and 20 mm, and a maximum height preferably of 30 mm, more preferably ranging between 3 and 15 mm, and still more preferably 8 and 10 mm. By increasing or decreasing the amplitude of these waves the structural strength of the laminated body 11 can be decreased or increased, respectively.
The successive sheets are preferably bonded to each other by means of the same artificial resins with which the paper is impregnated, for example by means of vynilic resins. As known per se, the mutual bond of the sheets results to be easy because the corrugations of the adjacent sheets are extended in different directions, where an upper sheet is laid on the ridges of the corrugations of the lower sheet, without requiring any intermediate laying plane.

In the particular embodiment illustrated in the drawings, reference is made to a panel shaped as a rectangular parallelepiped. It is understood that the choice of a parallelepiped shape is preferred for several applications though it is not compulsory in view of implementing the invention. Particularly, the invention is suitable to be implemented with a prismaticshaped panel, for example with two opposite faces having a curved profile, or with a geometrical structure different from a symmetrical structure.

With 14, 15 are designated perforated reinforcing tubular members, which are suitable to be integrated in the finished panel. The tubular members are fixed to the outer surfaces of the laminated body 11. In the preferred embodiment illustrated herein, the tubular members 14 are partially accommodated within seats 16 that are shaped as elongated recesses provided along the edges of the laminated body. This location facilitates the proper positioning of the tubular reinforcements relative to the laminated body 11 and allows an improved integration of these reinforcements in the finished panel.

The arrangement of the tubular reinforcements along the edges of the laminated body results in a cage-like framework that serves to optimize the strength of the panel against both compression and flexural or shear stresses acting according to any direction, particularly acting on planes perpendicular to the most extended face 17 of the panel in case the latter is used for obtaining a deck, and according to directions parallel to the face 17 when the panel is intended to act as a modular member for obtaining a load-bearing wall. Alternatively, according to a less preferred variant embodiment, not illustrated herein, the housing seats for the reinforcing members may be provided along the outer surfaces of the laminated body but not along the edges of the latter.

On the reinforced panels, a covering 18 of mortar or other hardening blend is applied, which in addition to covering at least one part of the outer surfaces of the laminated body 11, it also embeds the tubular reinforcing members, makes the latter integral with the laminated body and fills the inner cavities thereof thereby providing a monolith mixed structure along with the reinforcing members, which in the preferred embodiment has the appearance of a peripheral cage made of reinforced concrete and integral with the laminated body.

Still in accordance with the preferred embodiment, the tubular members have a cross-section of a rectangular or square shape with a diffuse perforation which has the double task of allowing the mortar to fill the space within the tubular member and facilitating the mechanical connection to other similar reinforcing members. The mechanical connection is mainly carried out with other reinforcing members of a same panel, in this example by means of fastening members such as bolts 19, advantageously connected at the vertices of the body 11. In the same manner, the mechanical connection can be carried out between consecutive or adjacent panels, according to the specific part of building to be built. The diffuse perforation is a particularly advantageous way to uniformly introduce and spread the mortar (or other blend) being applied. Furthermore, the even spread of the perforation is preferred over a small number of passageways for the mortar because it does not create any stress concentrations or peaks in certain areas relative to others, and thus it does not create particular structural weakening points. The permeation of the mortar in a plurality of holes creates a particuarly effective and well settled anchoring of the reinforcing members to the rest of the panel. It will be further appreciated that a tubular, and accordingly hollow, reinforcement has a higher moment of inertia than a solid member, with the cross-sectional area being equal. The hollow shape of the reinforcing members further offers a particularly comfortable seat for housing further reinforcing members, such as steel bars and/or wires that can be arranged within the tubular member to be then embedded in the same hardening mixture.

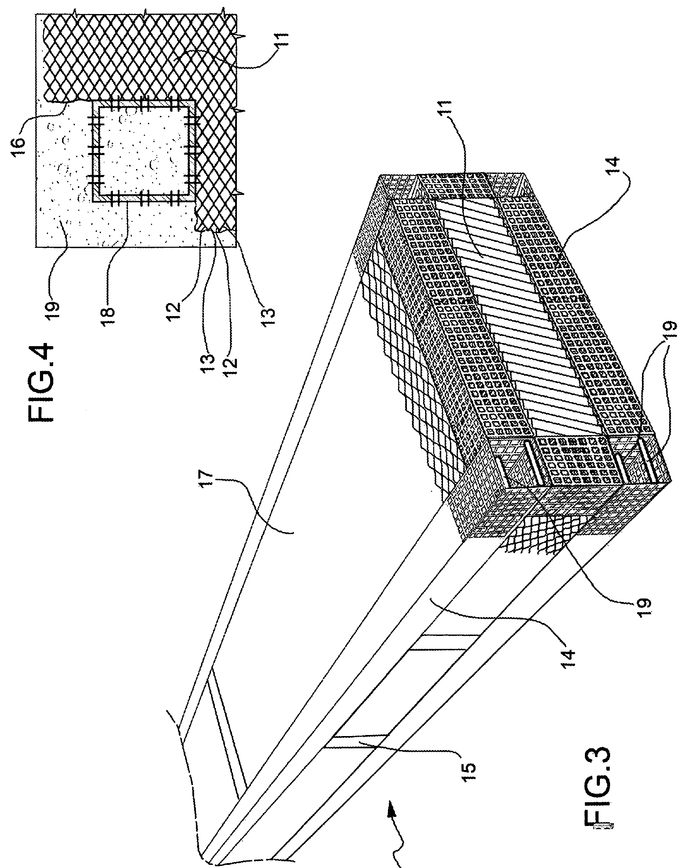

The square or rectangular shape of the cross-section of the reinforcing members facilitates the right-edge connection of these members around a prismatic or parallelepiped-shaped body. The coupling and the subsequent anchoring of the reinforcing members relative to the laminated body result to be more effective when, as in the embodiment illustrated herein, the seats provided along the edges of the laminated body have a cross-section that is partially corresponding to that of the tubular body. In this example, with square- or rectangular-section tubular members, the seats in the laminated body are provided by a pair of consecutive right-angled walls, against which two consecutive faces of the reinforcement tube 14 are rested (Fig. 4). According to other embodiments of the invention (not illustrated), the reinforcing members have an open-ring section (for example according to a C-shaped section), of a polygonal or rounded shape. For several applications, in fact, a longitudinal slit can be preferred, which facilitates the mortar to pass therethrough in order to fill the inner cavity of the reinforcing tubular member.

Suitable materials for making the reinforcing members can be selected from steel, fiberglass, wood or bamboo and more generally any rigid material capable of withstanding tensile stress. For example, the reinforcing members can be made of polycarbonate, advantageously obtained by means of pultrusion. In the preferred embodiment illustrated in the drawings, the reinforcing members are obtained by folding and welding a perforated metal sheet plate having a reticular structure, with drillings of any shape, square in this example.

The mortar can be applied by spraying, for example by means of plaster machines. According to a particularly preferred embodiment (Fig. 4), in the assembled condition, the outer surfaces of the reinforcing members are not flush with the outer surfaces of the laminated body, but are slightly recessed, in order to have a greater assurance that the metal member has been completely coated by the mortar that is spread on the outer faces of the panel and in which the reinforcing members are embedded.

The reinforcing members 15 act as brackets that transversally connect two of the longer reinforcing members that develop along parallel edges, and are mainly subjected to shear and torsion stresses when the panel is used for making a floor, whereas they counteract the peak load instability when the panel is used for the construction of a load-bearing wall.

As known, the outer surface of the laminated structure body is very uneven and offers an ideal grip for the concrete material, which is thereby easily held on all the outer faces of the laminate body 11. After the mortar has hardened, which coats the outer faces of the panel and provides reinforced concrete beams along the panel edges, the panel has such characteristics of flexural, compression and tensile strength as to make it suitable for acting as a modular member for obtaining a load-bearing wall or a floor, without requiring further reinforcing members.

While several embodiments have been illustrated and described herein, a number of variant embodiments can be obviously carried out, and the panel can be subjected to modifications relating to shape, size, arrangement of parts, construction details and materials used. For example, other connection means can be selected to fasten the reinforcing members to each other, without however departing from scope of the invention as defined by the annexed claims.

## Claims

1. A composite panel (10) for building floors, walls, beams and pillars, comprising a laminated structure body (11) of prismatic or parallelepiped shape comprising a plurality of corrugated sheets (12, 13) arranged in parallel planes, each corrugated sheet (12, 13) having corrugations with valleys and ridges extending in parallel directions, wherein the corrugations of adjacent sheets extend in different directions, wherein the valleys of the corrugations of an upper sheet rest on and are secured to the ridges of the corrugations of the lower adjacent sheet, the panel comprising a plurality of perforated tubular reinforcing members (14, 15) fixed on outer surfaces of the laminated structure body (11); **characterised in that** the corrugated sheets (12, 13) of the laminated structure body (11) are made of paper-like material impregnated with artificial resin.

2. A composite panel according to claim 1, **characterised in that** at least some of the tubular reinforcing members (14) are fixed along at least two parallel edges of the laminated structure body (11).

3. A composite panel according to claim 2, **characterised in that** the tubular reinforcing members (14) are connected to one another so as to form a cage-like frame around the edges of the laminated structure body (11).

4. A composite panel according to claim 1, 2 or 3, **characterised in that** the tubular reinforcing members (14, 15) are connected to one another by mechanical fastening means (19).

5. A composite panel according to any one of claims 2 to 4, **characterised in that** the tubular reinforcing members (14) are partially accommodated in seats (16) shaped as elongate recesses obtained along the edges of the laminated structure body (11).

6. A composite panel according to claim 5, **characterised in that** the seats (16) have transversal cross-sections partially matching those of the tubular reinforcing members (14) accommodated therein.

7. A composite panel according to claim 5 or 6, **characterised in that** the tubular reinforcing members (14, 15) have transversal cross-sections of rectangular or square shape and that the seats (16) of the laminated structure body (11) each provide a pair of consecutive walls at a right angle resting against two consecutive faces of the reinforcing members (14) accommodated therein.

8. A composite panel according to one or more of the preceding claims, **characterised in that** the tubular reinforcing members (14, 15) are embedded in a hardened covering (18), such as mortar or plaster, which fills their inner cavities.

9. A composite panel according to one or more of claims 5 to 8, **characterised in that** the outer surfaces of the tubular reinforcing members (14, 15) are recessed with respect to the outer faces of the laminated structure body (11).

10. A composite panel according to claim 8 or 9, **characterised in that** the hardened covering (18) covers at least partially at least one outer face of the laminated structure body (11).

11. A composite panel according to one or more of the preceding claims, **characterised in that** the tubular reinforcing members (14, 15) are made of a rigid material, preferably selected from the following: steel, fibreglass-reinforced resin, polycarbonate, wood, bamboo.

12. A composite panel according to one or more of the preceding claims, **characterised in that** the tubular reinforcing members (14, 15) are made of a perforated metal sheet of reticular structure.

13. A composite panel according to one or more of the preceding claims, **characterised in that** the tubular reinforcing members (14, 15) provide a substantially uniformly distributed perforations.

## Patentansprüche

1. Verbundplatte (10) zum Herstellen von Böden, Wänden, Trägern und Säulen, umfassend einen prismen- oder parallelepipedförmigen laminierten Strukturkörper (11), der eine Mehrzahl von geriffelten Lagen (12, 13) umfasst, die in parallelen Ebenen angeordnet sind, wobei jede geriffelte Lage (12, 13) Riffelungen mit sich in parallelen Richtungen erstreckenden Senken und Stegen aufweist, wobei sich die Riffelungen benachbarter Lagen in verschiedenen Richtungen erstrecken, wobei sich die Senken der Riffelungen einer oberen Lage an den Stegen der Riffelungen der unteren benachbarten Lage abstützen und daran gesichert sind, wobei die Platte eine Mehrzahl von perforierten rohrförmigen Verstärkungselementen (14, 15) umfasst, die an äußeren Oberflächen des laminierten Strukturkörpers (11) fixiert sind;
**dadurch gekennzeichnet, dass** die geriffelten Lagen (12, 13) des laminierten Strukturkörpers (11) aus papierartigem Material bestehen, das mit Kunstharz imprägniert ist.

2. Verbundplatte nach Anspruch 1, **dadurch gekennzeichnet, dass** wenigstens einige der rohrförmigen Verstärkungselemente (14) entlang wenigstens zwei parallelen Kanten des laminierten Strukturkörpers (11) fixiert sind.

3. Verbundplatte nach Anspruch 2, **dadurch gekennzeichnet, dass** die rohrförmigen Verstärkungselemente (14) miteinander derart verbunden sind, dass sie einen käfigartigen Rahmen um die Kanten des laminierten Strukturkörpers (11) herum bilden.

4. Verbundplatte nach Anspruch 1, 2 oder 3, **dadurch gekennzeichnet, dass** die rohrförmigen Verstärkungselemente (14, 15) miteinander durch mechanische Befestigungsmittel (19) verbunden sind.

5. Verbundplatte nach einem der Ansprüche 2 bis 4, **dadurch gekennzeichnet, dass** die rohrförmigen Verstärkungselemente (14) teilweise in Sitzen (16) in Form von länglichen Ausnehmungen untergebracht sind, die entlang der Kanten des laminierten Strukturkörpers (11) ausgebildet sind.

6. Verbundplatte nach Anspruch 5, **dadurch gekennzeichnet, dass** die Sitze (16) transversale Querschnitte aufweisen, die teilweise auf diejenigen der darin untergebrachten rohrförmigen Verstärkungselemente (14) abgestimmt sind.

7. Verbundplatte nach Anspruch 5 oder 6, **dadurch gekennzeichnet, dass** die rohrförmigen Verstärkungselemente (14, 15) transversale Querschnitte in Rechteck- oder Quadratform aufweisen und die Sitze (16) des laminierten Strukturkörpers (11) jeweils ein Paar von aufeinanderfolgenden Wänden unter einem rechten Winkel mit Abstützung an zwei aufeinanderfolgenden Flächen der darin untergebrachten Verstärkungselemente (14) bereitstellen.

8. Verbundplatte nach einem oder mehreren der vorhergehenden Ansprüche, **dadurch gekennzeichnet, dass** die rohrförmigen Verstärkungselemente (14, 15) in einer ihre inneren Hohlräume füllenden, gehärteten Abdeckung (18), beispielsweise Mörtel oder Gips bzw. Putz bzw. Pflaster, eingebettet sind.

9. Verbundplatte nach einem oder mehreren der Ansprüche 5 bis 8, **dadurch gekennzeichnet, dass** die äußeren Oberflächen der rohrförmigen Verstärkungselemente (14, 15) in Bezug auf die äußeren Flächen des laminierten Strukturkörpers (11) ausgenommen bzw. zurückgenommen sind.

10. Verbundplatte nach Anspruch 8 oder 9, **dadurch gekennzeichnet, dass** die gehärtete Abdeckung (18) wenigstens teilweise wenigstens eine äußere Fläche des laminierten Strukturkörpers (11) bedeckt.

11. Verbundplatte nach einem oder mehreren der vorhergehenden Ansprüche, **dadurch gekennzeichnet, dass** die rohrförmigen Verstärkungselemente (14, 15) aus einem festen Material bestehen, das vorzugsweise unter den folgenden ausgewählt ist: Stahl, fiberglas- bzw. faserglasverstärktes Harz, Polykarbonat, Holz, Bambus.

12. Verbundplatte nach einem oder mehreren der vorhergehenden Ansprüche, **dadurch gekennzeichnet, dass** die rohrförmigen Verstärkungselemente (14, 15) aus einer perforierten Metalllage mit netzartiger Struktur bestehen.

13. Verbundplatte nach einem oder mehreren der vorhergehenden Ansprüche, **dadurch gekennzeichnet, dass** die rohrförmigen Verstärkungselemente (14, 15) im Wesentlichen gleichmäßig verteilte Perforation bereitstellen.

## Revendications

1. Panneau composite (10) pour planchers, parois, poutres et piliers de bâtiments, comprenant un corps de structure stratifié (11) ayant une forme prismatique ou parallélépipédique comprenant une pluralité de feuilles ondulées (12, 13) disposées en plans parallèles, chaque feuille ondulée (12, 13) présentant des ondulations avec des creux et des crêtes s'étendant dans des directions parallèles, dans lequel les ondulations de feuilles adjacentes s'étendent dans différentes directions, dans lequel les creux des ondulations d'une feuille supérieure reposent sur les crêtes des ondulations de la feuille adjacente inférieure et sont fixées à celle-ci, le panneau comprenant une pluralité d'éléments de renfort tubulaires perforés (14, 15) fixés sur les surfaces externes du corps de structure stratifié (11) ; **caractérisé en ce que** les feuilles ondulées (12, 13) du corps de structure stratifié (11) sont constituées d'un matériau de type papier imprégné de résine artificielle.

2. Panneau composite selon la revendication 1, **caractérisé en ce qu'**au moins certains des éléments de renfort tubulaires (14) sont fixés le long d'au moins deux bords parallèles du corps de structure stratifié (11) .

3. Panneau composite selon la revendication 2, **caractérisé en ce que** les éléments de renfort tubulaires (14) sont reliés les uns aux autres de sorte à former un cadre de type cage autour des bords du corps de structure stratifié (11).

4. Panneau composite selon la revendication 1, 2 ou 3, **caractérisé en ce que** les éléments de renfort tubulaires (14, 15) sont reliés les uns aux autres par des moyens de fixation mécaniques (19).

5. Panneau composite selon l'une quelconque des revendications 2 à 4, **caractérisé en ce que** les éléments de renfort tubulaires (14) sont en partie logés dans des assises (16) sous la forme d'évidements allongés obtenus le long des bords du corps de structure stratifié (11).

6. Panneau composite selon la revendication 5, **caractérisé en ce que** les assises (16) ont des sections transversales correspondant partiellement à celles des éléments de renfort tubulaires (14) logés à l'intérieur.

7. Panneau composite selon la revendication 5 ou 6, **caractérisé en ce que** les éléments de renfort tubulaires (14, 15) ont des sections transversales de forme rectangulaire ou carrée et **en ce que** les assises (16) du corps de structure stratifié (11) présentent chacune une paire de parois consécutives à un angle droit reposant contre deux faces consécutives des éléments de renfort (14) logés à l'intérieur.

8. Panneau composite selon l'une ou plusieurs des revendications précédentes, **caractérisé en ce que** les éléments de renfort tubulaires (14, 15) sont logés dans un revêtement durci (18), tel que du mortier ou du plâtre, qui remplit leurs cavités internes.

9. Panneau composite selon l'une ou plusieurs des revendications 5 à 8, **caractérisé en ce que** les surfaces externes des éléments de renfort tubulaires (14, 15) sont en retrait par rapport aux faces externes du corps de structure stratifié (11).

10. Panneau composite selon la revendication 8 ou 9, **caractérisé en ce que** le revêtement durci (18) couvre au moins partiellement au moins une face externe du corps de structure stratifié (11).

11. Panneau composite selon l'une ou plusieurs des revendications précédentes, **caractérisé en ce que** les éléments de renfort tubulaires (14, 15) sont constitués d'un matériau rigide, de préférence choisi parmi les suivants : acier, résine renforcée de fibre de verre, polycarbonate, bois, bambou.

12. Panneau composite selon l'une ou plusieurs des revendications précédentes, **caractérisé en ce que** les éléments de renfort tubulaires (14, 15) sont constitués d'une feuille métallique perforée de structure réticulaire.

13. Panneau composite selon l'une ou plusieurs des revendications précédentes, **caractérisé en ce que** les éléments de renfort tubulaires (14, 15) présentent des perforations réparties de manière sensiblement uniforme.
